(19) Europäisches Patentamt
European Patent Office
Office européen des brevets

(11) **EP 1 473 855 A1**

(12) **EUROPEAN PATENT APPLICATION**

(43) Date of publication:
**03.11.2004 Bulletin 2004/45**

(51) Int Cl.$^7$: **H04B 10/08**

(21) Application number: **04252276.3**

(22) Date of filing: **19.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.04.2003 US 426479**

(71) Applicant: **LUCENT TECHNOLOGIES INC.**
**Murray Hill, New Jersey 07974-0636 (US)**

(72) Inventors:
• **Hunsche, Stefan**
  **Sunnyvale, California 94086 (US)**

• **Kilper, Daniel Charles**
  **Rumson, New Jersey 07760 (US)**
• **Weingartner, Wendelin**
  **New York, New York 10009 (US)**

(74) Representative:
**Watts, Christopher Malcolm Kelway, Dr. et al**
**Lucent Technologies (UK) Ltd,**
**5 Mornington Road**
**Woodford Green Essex IG8 OTU (GB)**

(54) **Method and apparatus for Q-factor monitoring using forward error correction coding**

(57) A system, method and apparatus for monitoring impairment related parameters such as Q factor within an all-optical system by using forward error correction (FEC) to derive a bit error rate (BER), which BER is used to determine the impairment related parameters.

FIG. 5

EP 1 473 855 A1

**Description**

FIELD OF INVENTION

This invention relates to the field of optical networks and, more specifically, to optical performance monitoring of such networks.

**BACKGROUND OF INVENTION**

The inability to measure bit-error rates (BER) in the optical layer has long been viewed as a shortcoming of optical networking. BER measurements are regarded as essential for the management and control of intelligent network elements. Presently, performance monitoring in synchronous optical network (SONET) systems and the like is achieved by accessing individual recovered bits in the SONET frame header through the use of electro-optic interfaces. An optical signal is converted to an electrical signal for analysis and amplification and then regenerated as an optical signal. In this manner, a bit-by-bit processing of overhead bytes to perform network maintenance tasks such as alarm surveillance, loss of frame (LOF) detection, loss pf signal (LOS) detection and the like is provided.

While the above techniques are useful, the desire to eliminate electro-optic interfaces within optical networks and transmission systems means that optical layer bit error rate measurement must be determined in some manner. Bit error rate testsets are not suitable for embedded optical performance monitoring applications because of their high cost and their performance requirements in terms of signal power, dispersion tolerance, and fixed data patterns. Furthermore, signals measured prior to reaching their destination are typically error free and, therefore, other measures such as the Q factor must be employed in order to obtain an estimate of the BER and the signal quality. The Q factor may be described as the average power in the digital ones minus the average power in the digital zeroes divided by the standard deviation of the noise on the ones plus the standard deviation of the noise on the zeroes. The Q factor provides a signal to noise ratio measure of performance. Previous Q factor monitoring techniques either employ specialized high-speed electronics such as dual decision threshold data recovery electronics or histogram methods, which are not well suited for detecting burst errors.

SUMMARY OF THE INVENTION

These and other deficiencies of the prior art are addressed by the present invention of a system, method and apparatus for monitoring an impairment parameter such as a Q-factor within a traditional or an all-optical communication system using, illustratively, a receiver portion of an optical transponder with electronics to process forward error correction (FEC) encoded data. Error information associated with the FEC correction of data is used to infer a bit error rate and Q factor. Where extremely low error conditions exist, the decision threshold for a data recovery circuit is adjusted to impart errors to a data stream processed by the FEC electronics.

A method according to one embodiment of the invention comprises recovering a data signal from an optical signal; processing the recovered signal using forward error correction (FEC) TO DETERMINE THEREBY A BIT ERROR RATE (BER); and determining an impairment parameter of the optical signal using the determined BER. ,

BRIEF DESCRIPTION OF THE DRAWINGS

The teachings of the present invention can be readily understood by considering the following detailed description in conjunction with the accompanying drawings, in which:

FIG. 1 depicts a high level block diagram of an optical transmission system utilizing an embodiment of the present invention;
FIG. 2 depicts a high level block diagram of an optical performance monitor suitable for use in the system of FIG. 1;
FIG. 3 graphically depicts a Q factor determination process according to an embodiment of the invention;
FIG. 4 depicts a flow diagram of a method according to an embodiment of the present invention; and
FIG. 5 graphically depicts an impairment determination process according to an embodiment of the invention

To facilitate understanding, identical reference numerals have been used, where possible, to designate identical elements that are common to the figures.

DETAILED DESCRIPTION OF THE INVENTION

The subject invention will be primarily described within the context of an optical transmission system configured in a particular manner. However, it will be appreciated by those skilled in the art that the invention may be advantageously employed in any type of system transporting data and associated FEC information. It is also noted that the subject invention will be described primarily within the context of monitoring a Q-factor via BER determinations made using forward error correction coding within a monitored optical signal. However, as will be discussed in more detail below, the present invention is generally applicable to using such forward error correction coding to establish bit error rate contours at either the center of an optical signal eye diagram (such as preferred with respect to the Q-factor) or at other portions of an eye diagram. In each of these cases, the various bit error rate contours established with respect to an optical signal eye diagram provide useful information pertaining to optical performance of the system.

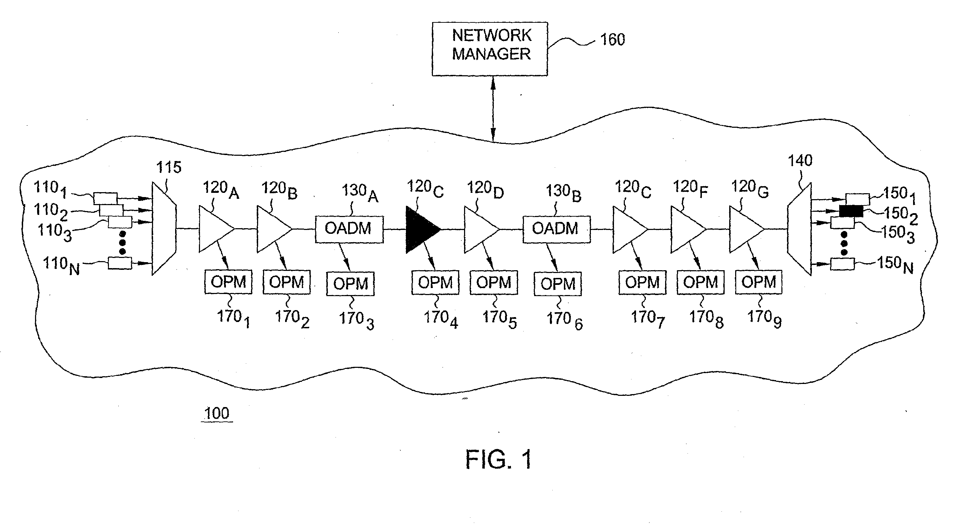

FIG. 1 depicts a high level block diagram of an optical transmission system utilizing an embodiment of the present invention. Specifically, the optical transmission system 100 of FIG. 1 comprises a plurality of optical transmitters $110_1$ through $110_N$ (collectively optical transmitters 110), an optical multiplexer 115, a plurality of optical amplifiers $120_A$ through $120_G$ (collectively optical amplifiers 120), a plurality of optical add-drop multiplexers (OADM) $130_A$ and $130_B$ (collectively OADMs 130), an optical demultiplexer 140, a plurality of optical receivers $150_1$ through $150_N$ (collectively optical receivers 150), a network manager 160 and a plurality of optical performance monitors (OPMs) $170_1$ through $170_9$ (collectively OPMs 170).

Each of the plurality of optical transmitters 110 provides an optical output signal having a respective wavelength and having modulated thereon data as well as forward error correction (FEC) information useful in recovering the data. The multiplexer 115 multiplexes the respective wavelength optical signals produced by the transmitters 110 to produce thereby a wavelength division multiplex (WDM) signal comprising a plurality (N) of wavelength channels. The WDM signal produced by the multiplexer 115 is propagated through a plurality of optical network elements such as optical amplifiers 120 and optical add-drop multiplexers 130 to the optical demultiplexer 140. The optical demultiplexer 140 demultiplexes the WDM optical signal to extract therefrom the various wavelength channels initially provided by the optical transmitters 110. Each wavelength channel is coupled to a respective optical receiver 150 for further processing.

In the system 100 of FIG. 1, the WDM signal produced by the multiplexer 115 is propagated through the following optical elements in the order named: first optical amplifier (OA) $120_A$, second OA $120_B$, first OADM $130_A$, third OA $120_C$, fourth OA $120_D$, second OADM $130_B$, fifth OA $120_E$, sixth OA $120_F$, seventh OA $120_G$ and optical demultiplexer 140. It will be appreciated by those skilled in the art that any optical signal path utilizing one or more optical network elements will benefit from the teachings of the present invention.

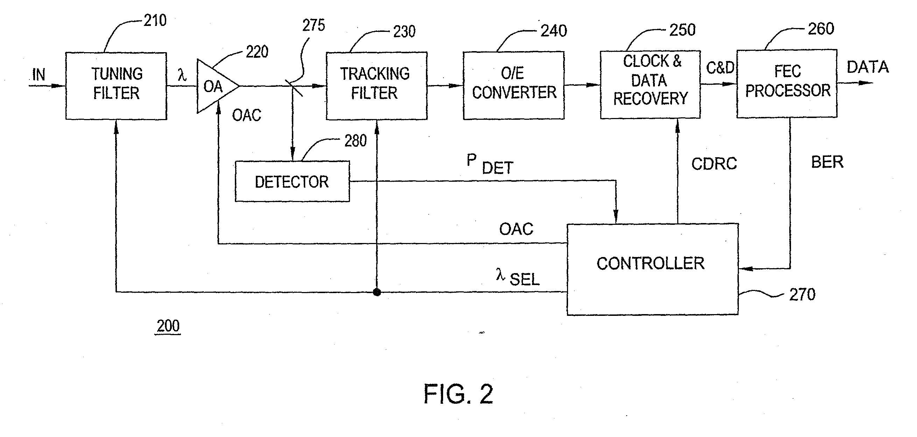

Each of the optical amplifiers 120 and optical add-drop multiplexers 130 has associated with it a respective optical performance monitor (OPM) 170. An embodiment of an OPM 170 will be described in more detail below with respect to FIGS. 2-4. Briefly, each of the OPMs 170 receives from its respective optical network element a small portion of the optical signal passing therethrough. For example, an optical splitter (not shown) may be associated with each of the optical network elements to divert a small portion of the optical signal passing therethrough (e.g., one or two percent of the optical signal power) to its respective OPM 170. The OPM 170 operates to select individual wavelength channels, recover at least a portion of the data propagated via the selected wavelength channel, and apply forward error correction (FEC) adapted to remove errors from the received data. A bit error rate (BER) estimate is generated by determining the number of errors corrected by the FEC processor and knowing the data rate of extracted wavelength channel data. Optionally, the decision threshold level of a data slicer (i.e., the decision threshold used to recover binary zeros and ones from a received data stream) is adjusted over a range of decision threshold levels to responsively produce a corresponding range of bit error rate estimates. The BER estimates may be plotted as a function of the data slicer decision thresholds at a fixed timing point (e.g., the center of an eye diagram) to produce a BER contour. The signal-to-noise ratio (i.e., the Q factor) of the wavelength channel may be determined with respect to the shape of the BER contour.

Thus, each OPM 170 operates to determine an impairment parameter such as the Q factor of one or more wavelength channels within an optical signal passing therethrough. By determining the Q factor of each network element within an optical communication system, the source of data degradation experienced by a signal terminating receiver may be traced back to the network element (or communications link) proximate an OPM indicating that a low Q factor exists. It should be noted that the Q factor may be determined for each of the wavelength channels propagated through the system, a portion of the wavelength channels or one sample channel. Moreover, it should be noted that system costs may be reduced by associating a respective OPM with some, rather than all, of the optical network elements (e.g., every second or third network element, those network elements tending to fail more often and the like).

The network manager 160 comprises, illustratively, a workstation or controller including memory, processing and input/output elements that provides telecommunications management network (TMN) functions including support for network element (NE) operations and data networking. The technologies used to implement the TMN functions comprise, illustratively, overhead bits encoded on channels, optical supervisory channels, dedicated transmission links, packet data networks or any combination of the these (not shown).

The present invention may be utilized within the context of TMN to identify a specific source of signal error or degradation. In one embodiment each of a plurality of network elements has associated with it the corresponding OPM 170. By noting that a wavelength channel processed by a receiver indicates a high bit error rate, the network manager 160 responsively queries each of the network element OPMs within the optical signal path to determine their respective BER/Q-factor/monitor indicator histories. By determining the point at which the monitor indicator for a particular channel increased beyond a threshold from one network element to a following network element, it can be inferred by the network manager 160 that the network element first associated with an increased BER is defective or degraded in some manner. In such instances, it is appropriate to dispatch repair personnel or otherwise reroute (i.e., reprovision) the communications link to avoid such high error experience.

FIG. 1 depicts third optical amplifier $120_C$ and second receiver $150_2$ as being shaded. This shading illustrates that third optical amplifier $120_C$ is the source of errors which ultimately produce a high BER at receiver $150_2$. In this example, the high BER at the receiver $150_2$ is noted by the network manager 160, which responsively queries (in the following order) OPM $170_9$, OPM $170_8$ and so on back to OPM $170_4$. For each query of an OPM 170, the network manager 160 retrieves historical information pertaining to changes in the Q factor of each wavelength channel passing through the corresponding optical element. In the case of the example described herein with respect to FIG. 1, the first sign of the failure or degradation of third OA $120_C$ is indicated by differences in same-channel Q-factors between corresponding OPM $170_4$ and next OPM $170_5$. Depending upon OPM placement (i.e., sampling the input or output signal of the optical element), the error condition may also be detected by comparing the historical data pertaining to OPM $170_3$ (corresponding to OADM $130_A$) and OPM $170_4$.

The TMN may also utilize historical information from the OPMs to track the overall performance of the system. Over time a combination of several components each exhibiting a small amount of performance degradation may cause the total performance of the system to suffer. A change in system performance can also be caused by occasional repairs, new channels being provisioned, and other common network modifications. By monitoring the time evolution of the OPM signals, the TMN can determine the overall health of the network and therefore be used to determine whether a system is near the end of its life, whether additional channel loading can be tolerated, or other network management considerations related to system health.

FIG. 2 depicts a high level block diagram of an optical performance monitor (OPM) suitable for use in the optical transmission system 100 of FIG. 1. Specifically, the OPM 200 of FIG. 2 receives, from an optical processing or transmission element within the system 100 of FIG. 1, a small portion (e.g., 1 or 2%) of the optical signal power propagated therethrough as input signal IN.

Specifically, the optical performance monitor (OPM) 200 of FIG. 2 comprises a tuning filter 210, an optical amplifier (OA) 220, an optional tracking filter 230, an optical to electrical (O/E) converter 240, a clock and data recovery circuit 250, a forward error correction (FEC) processor 260 and a controller 270. Optionally, a splitter 275 and detector 280 are also provided. Those skilled in the art will recognize that the choice of components will depend on the particular details of the input signal IN , which will typically vary for different communication systems.

The input signal IN, illustratively a relatively low power wavelength division multiplex (WDM) signal is received by the tuning filter 210. The tuning filter 210, in response to a control signal $\lambda_{SEL}$, selectively filters (i.e., blocks) all but one of the wavelength channels included within the WDM input signal IN. The selected wavelength channel $\lambda$ is amplified by the optical amplifier 220 and coupled to the O/E converter 240. The amount of amplification imparted to the selected wavelength channel $\lambda$ is optionally controlled by an optical amplifier control signal OAC produced by the controller 270. Since the WDM input signal IN is tapped from a main optical signal path within the optical communications system 100 of FIG. 1, the power level of the WDM input signal IN may comprise only 1% or 2% of the power present within the main optical communications channel. Thus, the optical amplifier 220 is used to amplify the selected wavelength channel $\lambda$ to a level appropriate for further processing in accordance with the present invention. In the event that a larger tap of the main optical signal is available (e.g. in the range 10% to 50%) and the optical losses in the OPM components are sufficiently low, then the optical amplifier 220 could be removed from the OPM without changing its function.

The optional tracking filter 230 is disposed between the OA 220 and O/E converter 240 to filter optical signal frequencies outside of those associated with the selected wavelength channel $\lambda$. For example, in the case of the optical amplifier 220 imparting to the selected wavelength channel $\lambda$ a noise component, (i.e., spurious frequencies and/or other spectral errors), the tracking filter 230 is used to attenuate power at those frequencies not associated with the selected wavelength channel $\lambda$. The tracking filter 230 is responsive to the wavelength selection signal $\lambda_{sel}$ produced by the controller 270 and previously utilized by the tuning filter 210. In the case of an optical amplifier 220 that does not exhibit such behavior, the tracking filter 230 may be avoided and the amplified wavelength channel may be connected directly to the optical to electronic (O/E) converter 240. Those skilled in the art will recognize that other filter and amplifier combinations may be used to select a single channel and adjust its power to the appropriate level without changing the function of the OPM.

The O/E converter 240 converts the optical signal associated with the selected wavelength channel $\lambda$ into a corresponding electrical signal, which is coupled to the clock and data recovery circuit 250.

The clock and data recovery circuit 250, in response to a control signal CDRC provided by the controller 270 operates to recover clock information and data (including FEC overhead bits) from the signal provided by the O/E converter 240. The clock information and data recovered by the clock and data recovery circuit 250 is provided to the FEC processor 260.

The FEC processor 260 is adapted to perform forward error correction processing operations on the recovered data signal to correct errors within the recovered data signal. The FEC coding on the data can be provided by a digital wrapper that enables FEC performance monitoring for a variety of data signal protocols. In so correcting the errors within the data signal, the FEC processor is able to provide information indicative of the type and/or quantity of errors imparted to the data signal during the transmission path between the initial signal source (transmitter 110) and the FEC processor 260. Such information is useful in determining a bit error rate (BER) and other digital error measures associated with the recovered data signal. Optionally, a recovered data signal DATA is provided to other processing elements (not shown) for further processing.

The O/E converter 240, clock and data recovery circuit 250 and forward error correction (FEC) processor 260 together provide the functionality normally found in a receiver or transponder. Thus, the O/E converter 240, clock and data recovery circuit 250 and FEC processor 260 may be integrated onto a common substrate such as with an application specific integrated circuit (ASIC).

The controller 270 comprises, illustratively, a microprocessor, memory and input/output (I/O) circuitry. The I/O circuitry provides interfacing between the controller 270 and the various elements in communication with the controller 270. The memory stores programs which, when executed by the processor, perform the various functions and steps described herein with respect to the controller 270. The controller 270 utilizes the BER data provided by the FEC processor 260 to assess the bit error rate of a selected wavelength $\lambda$ and derive therefrom a Q factor of the corresponding optical element.

In a first mode of operation, the invention measures a bit error rate using an optimal decision threshold of the clock and data recovery circuit 250. Where an optimum decision threshold level is used, a BER derived from the FEC may be used to directly calculate a Q factor. The first mode of operation is used when sufficient errors exist within the recovered data signal.

The controller 270 operates in a second mode of operation when it is not possible to directly calculate Q factor from optimum decision threshold level BER measurements. Thus, in the second mode of operation, an equivalent Q factor is determined by recording the BER as a function of the decision threshold level for several positions on either side of an optimal threshold level. This technique will now be discussed in greater detail.

The equivalent Q factor is measured by recording the BER vs. decision level at a fixed timing phase, such as down the center of an eye diagram. The equivalent mean and sigma of the marks and spaces are determined by fitting this data to the appropriate ideal Gaussian characteristic. The ideal characteristic, assuming Gaussian noise statistics, is given by the following equation 1:

$$BER(D) = \frac{1}{2}\left\{ erfc\left(\frac{|\mu_1 - D|}{\sigma_1}\right) + erfc\left(\frac{|\mu_0 - D|}{\sigma_0}\right) \right\}$$

where equivalent $\mu_{1,0}$, and $\sigma_{1,0}$ are the mean and standard deviation of the mark and space data rails, D, is the decision level, and *erfc(x)* is the error function given by the following equation 2:

$$erfc(x) = \frac{1}{\sqrt{2\pi}} \int_{x}^{\infty} e^{-\beta^2/2}\, d\beta \approx \frac{1}{x\sqrt{2\pi}} e^{-x^2/2}$$

where the approximation is nearly exact for x >3. The equivalent Q factor is calculated using the $\mu$ and $\sigma$ of each rail in a fashion similar to equation 1.

The calculation of the Q factor is performed as follows. The data is divided into two sets that have the measured BER dominated by the marks rail and spaces rail. The raw data is separated at the point of minimum error rate for measurable BERs, or at any value of *D* that yields error-free performance, for cases where the SNR is high. Each data set is fitted to an ideal curve, assuming Gaussian noise statistics, to obtain an equivalent mean and sigma for the positive and negative rail. Equation 2 naturally separates into errors dominated by mark errors and space errors. Once separated, the BER is an expression given by a single ½$erfc(\cdot)$ function. Each set of BER data is passed through an inverse error function, and then a linear regression is performed with the decision levels $D_i$. The equivalent $\sigma_{1,0}$ and $\mu_{1,0}$, are given by the slope and intercept of the linear regressions. For ease of computation, the inverse ½$erfc(\cdot)$ function is performed by first taking the logarithm of the BER. $Log(½erfc(\cdot))$ is a smooth one-one function that can be inverted by many numerical methods, or more simply by using a polynomial fit, as given by the following Equation 3:

$$\left\{log(½\,erfc(\cdot))\right\}^{-1}(x) \approx 1.192 - 0.6681x - 0.0162x^2$$

where x is $log(BER)$, and equation 3 is accurate to $\pm0.2\%$ over the range of BERs from $10^{-5}$ to $10^{-10}$, This is similar to the calculation performed to distort the axis of a BER vs. received optical power curve, to make the data fall on a straight line.

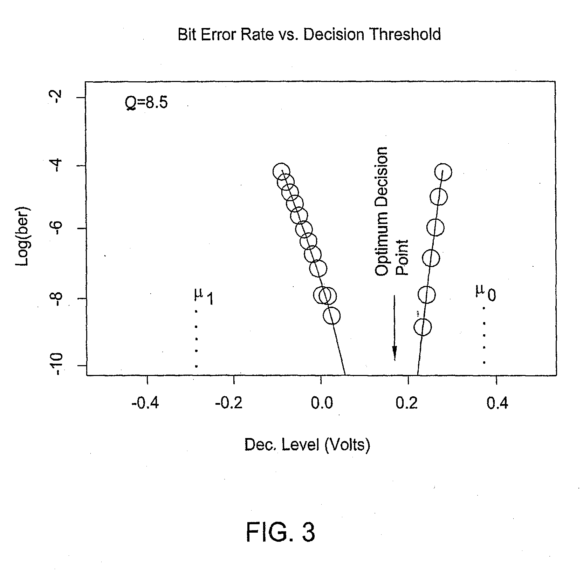

FIG. 3 graphically depicts a Q factor determination process according to an embodiment of the invention. Specifically, FIG. 3 depicts bit error rate plotted as a function of decision threshold level. The bit error rate is logarithmically displayed while the decision threshold level is depicted as the amplitude (in volts) used by the clock and data recovery circuit 250 for the above-described data slicing function. in the graphical depiction 300 of FIG. 3, A BER was measured over 1 second intervals and is considered valid if at least 5 errors were recorded. A minimum BER was measured at $10^{-9}$, while a maximum BER was measured at $10^{-5}$. An equivalent Q factor was determined to be approximately 8.5. An arrow denoted as optimum decision point indicates a predicted optimum decision threshold level, while two vertical segments denoted as $\mu_1$ and $\mu_0$ show the equivalent $\mu_i$ for the marks and spaces rail.

Specifically, by scanning the decision threshold level between approximately -0.3 and +0.3V, errors are accumulated and, when plotted, result in the V-curve depicted in FIG. 3. The BER approaches a minimum (i.e., zero) at the optimum decision point, and increases as the decision threshold level is adjusted to form thereby the V shape. By analyzing the V curve, the Q factor and bit error rate at the optimum threshold level may be determined. That is, by extrapolating from the plotted curves, the point at which the curves meet gives the optimum decision threshold and using the methods described above can be used to determine the Q factor.

In addition to the Q factor monitoring described above, the FEC error measurement can be used for other signal quality measures or impairment parameters associated with scanning the decision threshold and phase. The decision phase point refers to the sample time within the bit slot at which decisions are made. If the optimum phase is defined as the center of the bit slot, then errors can be generated by scanning the phase to sample times earlier or later in the bit slot. Thus, the signal eye pattern is optionally mapped out as a function of the error counts or rate by scanning both the threshold and phase. The eye pattern is optionally used to monitor for specific impairments such as chromatic dispersion, polarization mode dispersion, or amplified spontaneous emission noise. Other optional measures include adjusting the decision level and phase to specific points within the eye pattern and monitoring the error count as a function of time. Noise or distortion will cause the error counts at a given point in the eye pattern to vary with signal quality. Similarly the decision threshold and phase can be continuously adjusted to maintain a constant error count or rate. The required decision threshold or phase will vary with signal quality and therefore serves as a measure of signal quality. Those skilled in the art and informed by the teachings of the present invention will recognize that the FEC error counts together with a variable decision threshold and phase can be used to construct a plurality of associated performance measures, such use being contemplated by the present invention.

In one embodiment of the invention, rather than generating an entire V-curve such as depicted in FIG. 3, only a very few points are monitored (e.g., one point) to enable a rapid trend analysis determination. That is, in one embodiment, only the BER associated with a very few relative threshold positions are processed such that a rapid determination of increased BER may be made. By monitoring these one or very few relative threshold positions for a period of time, performance trends are determined with respect to an increase in BER associated with the monitored threshold position(s).

In one embodiment of the invention, a splitter 275 is used to divert a portion of the amplified wavelength channel to a detector 280. The detector 280 responsively determines a power level of the diverted portion, which power level is communicated to the controller 270 as power detection signal Pdet. The detector 280 may comprise a broadband optical detector such as a p-i-n detector (PIN) or an avalanche photodiode (APD).

In various embodiments of the invention, the controller 270 utilizes the optical amplifier control signal OAC to controllably amplify the selected wavelength channe $\lambda$ such that each of a plurality power levels (as indicated by the power detection signal $P_{det}$) of the selected wavelength channel $\lambda$ are processed by the transponder circuitry to produce respective bit error rate data. That is, by selecting each of a plurality of amplification levels, and monitoring the bit error rate selected associated with the selected wavelength channel $\lambda$ for each of these power levels, controller 270 may produce information useful in determining, for example, the Q-factor associated with at least the selected wavelength channel $\lambda$. Further, by selectively processing each of a plurality of wavelength channels within the WDM input signal IN, the controller 270 may determine Q-factor data for each of these data wavelength channels. In this manner, the Q-factor of a signal propagated through the communication system 100 of FIG. 1 may be determined at each of several points or network elements within the communications system, such as the amplifiers 120, optical add-drop multiplexers 130 and the like. As previously noted, specific impairments such as chromatic dispersion, polarization mode dispersion or amplified spontaneous emission noise may also be monitored by adjusting the decision phase point within the eye pattern to a non-optimum point (i.e., to a point other than the center of the bit slot where Q-factor is determined).

The optical transmission system 100 of FIG. 1 may be adapted to benefit from the present invention using several configurations. For example, in one embodiment of the invention each of the optical elements 120, 130 are associated with the respective OPM 170. In this embodiment, the OPMs continually retrieve respective Q factor information such that the network manager 160, in response to a high BER detector by a receiver 150 can determine which of the optical elements is responsible for the high BER reception. Each of the OPMs 170 may continuously scan each of the wavelength channels to derive V-curve information and, therefore, derive corresponding Q factor information. The Q factor information may be logged at the OPM as a Q factor/channel map which is retrieved by the network manager 160 in response to a high BER alarm at a receiver 150. To conserve memory, these logs may be held for a finite amount of time.

In one embodiment of the invention, at each optical element associated with a respective OPM, the OPM continuously scans the individual wavelength channels to determine Q factor information using one of the above-described techniques. A database is then populated in which each of the wavelength channels has associated with it a corresponding Q factor, which Q factor is updated periodically. In the event of a network alarm or other condition, the network manager 160 retrieves the Q factor/channel maps from each of the OPMs to identify where within the communications channel the likely source of error resides. In a preferred embodiment, upon determining that a high BER condition exists at receiver 150, the network manager 160 retrieves the Q factor/channel map from the OPM associated with a prior optical element to determine if the error condition exists at that point. The network manager 160 utilizes the Q factor/channel map (or other impairment maps) to iteratively retrieve from preceding OPMs their respective Q factor/channel maps (or other impairment maps) until the OPM associated with a defective optical element or channel is determined.

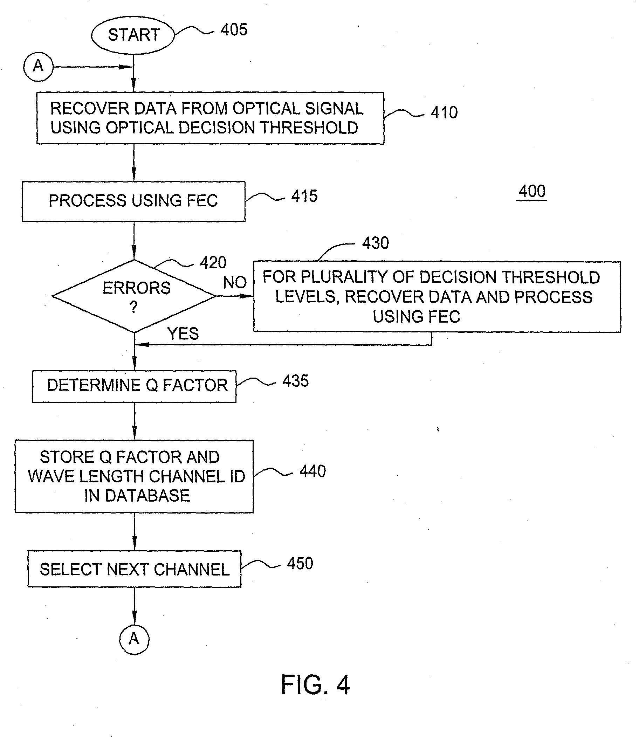

FIG. 4 depicts a flow diagram of a method according to an embodiment of the present invention. Specifically, the method 400 of FIG. 4 is suitable for use within, for example, the controller 270 of the OPM 200 depicted in FIG. 2.

The method 400 is entered at step 405 and proceeds to step 410, where data from a selected optical signal is recovered using an optimal decision threshold. At step 415, the recovered data is processed using forward error correction (FEC) to derive thereby error information.

At step 420, a query is made as to whether the FEC processing at step 415 resulted in the correction or identification of any errors. If errors were detected at step 415, then at step 435 the Q factor of the selected wavelength channel is determined directly with respect to the optimal decision threshold and error levels. That is, the controller 270 operates in the above-described first mode of operation to determine the Q factor.

At step 440, the Q factor, wavelength channel identification, time and/or other relevant data is stored in a respective or consolidated OPM database. At step 450, the next wavelength channel is selected, and the method then proceeds to step 410.

If no (or an insufficient number of) errors are detected at step 420, then for each of a plurality of decision threshold levels the data is recovered and processed using FEC to produce a plurality of corresponding BER terms. As previously noted with respect to FIG. 3, one embodiment of the invention utilizes the monitoring of one or a very few decision threshold levels to enable a fast trend analysis function. That is, rather than generating BER data for a plurality of threshold positions sufficient to form a V-curve, a BER contour comprising one or a very few points is instead formed which BER contour is compared to prior BER contours to establish a trend such as increasing impairment, decreasing impairment or relatively constant levels of impairment at the selected threshold position(s).

At step 435, the Q factor is determined. As previously noted, a V-curve generated using such data provides a BER contour that may be used to determine a Q factor. That is, the controller 270 operates in the above-described second mode of operation to determine the Q factor using a BER contour defined by the plurality of BER terms.

At step 440, the Q factor, wavelength channel identification, time and/or other relevant data is stored in a respective or consolidated OPM database. At step 450, the next wavelength channel is selected, and the method then proceeds to step 410.

The method 400 of FIG. 4 may be continually operated to populate thereby a database which stores, for a finite (optionally selectable) amount of time, data indicative of the Q factor associated with each wavelength channel at each of a plurality of times. In this manner, subsequent access of the OPM database by, for example, a network manager 160 may provide information useful in enabling network manager 160 to determine the source of a received error.

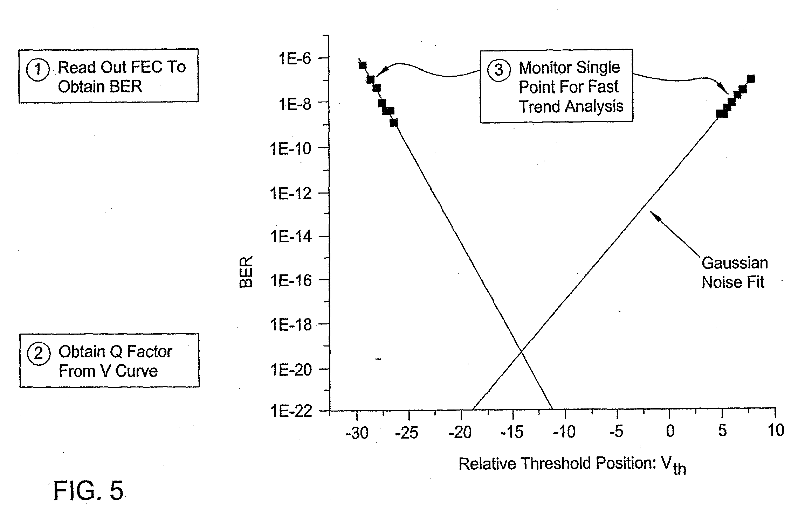

FIG. 5 graphically depicts an impairment determination process according to an embodiment of the invention. Specifically, FIG. 5 depicts bit error rate (BER) plotted as a function of relative threshold position $V_{TH}$. The BER is logarithmically displayed while the relative threshold position is depicted as an offset voltage amplitude used by the clock and data recovery circuit 250 for the above-described data slicing function. As previously discussed with respect to FIGS. 3 and 4, a forward error correction is determined with respect to each of a plurality of relative threshold positions to determine thereby corresponding BER values. A V-curve is then plotted to obtain, for example, a Q-factor or other impairment parameter of the optical signal being processed. It is noted that the V-curve of FIG. 5 is plotted as a Gaussian noise fit for each of a plurality of relative threshold positions to arrive at an intersection point of approximately $V_{TH} = 14$ and $BER = 1 \times 10^{-19}$. Within the context of obtaining a Q-factor, the Q-factor is obtained using these parameters in the above-described manner. Optionally, it is noted that single points may be monitored for fast trend analysis as previously discussed.

Although various embodiments that incorporate the teachings of the present invention have been shown and described in detail herein, those skilled in the art can readily devise many other varied embodiments that still incorporate these teachings.

## Claims

1. A method, comprising:

   recovering a data signal from an optical signal;
   processing the recovered signal using forward error correction (FEC) to determine thereby a bit error rate (BER); and
   determining an impairment parameter of said optical signal using the determined BER.

2. The method of claim 1, wherein:

   said step of recovering comprises selecting each of a plurality of decision threshold levels to provide respective recovered data signals;
   each of said respective recovered data signals being processed using FEC to determine thereby a respective BER for each decision threshold level, said BER determinations establishing a BER contour;
   said impairment parameter being determined using said BER contour.

3. The method of claim 1, wherein:

   said optical signal comprises a wavelength channel within a plurality of wavelength channels forming a wavelength division multiplexed (WDM) signal;
   said step of recovering comprising:

   selecting, using an optical filter, a wavelength channel from said WDM signal;
   converting said selected wavelength channel into an electrical signal; and
   applying a decision threshold level to said electrical signal to recover thereby said data signal.

4. The method of claim 1, wherein:

   said step of recovering comprises selecting an optimum decision threshold level to provide a respective recovered data signal;
   said respective recovered data signal being processed using FEC to determine thereby a respective BER;
   said impairment parameter being determined using said BER.

5. The method of claim 1, wherein said impairment parameter comprises a Q-factor.

6. The method of claim 1, wherein said impairment parameter comprises at least one of a chromatic dispersion, a polarization mode dispersion and an amplified spontaneous emission noise.

7. An optical performance monitor (OPM), comprising:

   a tuning filter, for selecting an optical signal from a plurality of optical signals forming a wavelength division multiplexed (WDM) optical signal; and
   a receiver, for recovering data from said selected optical signal and processing said recovered data using forward error correction (FEC) to determine thereby a bit error rate (BER); and
   a controller, for determining an impairment parameter of said optical signal using the determined BER.

8. The OPM of claim 7, wherein said receiver comprises:

   an optical to electrical converter, for converting said optical signal into an electrical signal;
   a data recovery circuit, for recovering a stream of data bits according to a decision threshold level; and
   a FEC processor, for identifying errors within said stream of data bits to determine thereby said BER.

9. A system, comprising:

   a plurality of network elements, for propagating a data bearing optical signal from a transmitter to a receiver, said receiver monitoring a bit error rate (BER) of recovered data;
   a plurality of optical performance monitors (OPMs), for monitoring at least one impairment parameter of said data bearing optical signal proximate at least some of said plurality of network elements; and
   a network manager, responsive to a BER at said receiver indicative of a degraded network element to identify said degraded network element by examining said Q factors.

10. The system of claim 9, wherein said impairment parameter comprises at least one of a Q-factor, a chromatic dispersion, a polarization mode dispersion and an amplified spontaneous emission noise.

FIG. 1

EP 1 473 855 A1

FIG. 2

Bit Error Rate vs. Decision Threshold

FIG. 3

START — 405

A →

RECOVER DATA FROM OPTICAL SIGNAL
USING OPTICAL DECISION THRESHOLD — 410

PROCESS USING FEC — 415

400

— 420
ERRORS ?

NO → FOR PLURALITY OF DECISION THRESHOLD
LEVELS, RECOVER DATA AND PROCESS
USING FEC — 430

YES

DETERMINE Q FACTOR — 435

STORE Q FACTOR AND
WAVE LENGTH CHANNEL ID
IN DATABASE — 440

SELECT NEXT CHANNEL — 450

A

FIG. 4

FIG. 5

EP 1 473 855 A1

## EUROPEAN SEARCH REPORT

European Patent Office

**Application Number**

EP 04 25 2276

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 433 904 B1 (BARRY RICHARD ET AL) 13 August 2002 (2002-08-13) | 1,3-8 | H04B10/08 |
| Y | * column 3, line 22 - line 33 * <br> * column 3, line 54 - line 56 * <br> * column 3, line 65 - column 4, line 18 * <br> * column 5, line 54 - column 6, line 5 * <br> * column 9, line 44 - column 10, line 23 * <br> * figures 1,3,6 * <br> ----- | 2,9,10 | |
| Y | PATENT ABSTRACTS OF JAPAN <br> vol. 2000, no. 26, <br> 1 July 2002 (2002-07-01) <br> & JP 2001 268057 A (ANDO ELECTRIC CO LTD), <br> 28 September 2001 (2001-09-28) <br> * abstract; figure 2 * <br> ----- | 2 | |
| Y | WO 02/071670 A (LIGHTSCAPE NETWORKS LTD ; MINTZ YARON (IL); ZAACKS MARK R (IL); MAHLAB) 12 September 2002 (2002-09-12) <br> * page 10, line 19 - page 12, line 4 * <br> * page 12, line 21 - page 13, line 11 * <br> * figure 2 * <br> ----- | 9,10 | **TECHNICAL FIELDS SEARCHED (Int.Cl.7)** <br><br> H04B |

The present search report has been drawn up for all claims

| Place of search | Date of completion of the search | Examiner |
|---|---|---|
| The Hague | 17 August 2004 | Hadziefendic, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 25 2276

17-08-2004

| Patent document cited in search report | | Publication date | Patent family member(s) | | Publication date |
|---|---|---|---|---|---|
| US 6433904 | B1 | 13-08-2002 | AU | 6354900 A | 13-02-2001 |
| | | | CA | 2380416 A1 | 01-02-2001 |
| | | | EP | 1360844 A2 | 12-11-2003 |
| | | | WO | 0108422 A2 | 01-02-2001 |
| JP 2001268057 | A | 28-09-2001 | NONE | | |
| WO 02071670 | A | 12-09-2002 | EP | 1364478 A2 | 26-11-2003 |
| | | | WO | 02071670 A2 | 12-09-2002 |
| | | | US | 2004076430 A1 | 22-04-2004 |